Europäisches Patentamt

European Patent Office

Office européen des brevets

(19)

(11) Veröffentlichungsnummer: **0 007 459**
A1

(12) # EUROPÄISCHE PATENTANMELDUNG

(21) Anmeldenummer: **79102180.1**

(22) Anmeldetag: **29.06.79**

(51) Int. Cl.³: **A 01 G 7/06**
**A 01 M 1/22**

(30) Priorität: **26.07.78 DE 2832696**

(43) Veröffentlichungstag der Anmeldung:
**06.02.80 Patentblatt 80/3**

(84) Benannte Vertragsstaaten:
**AT BE CH FR GB IT LU NL SE**

(71) Anmelder: **Battelle-Institut e.V.**
**Am Römerhof 35**
**D-6000 Frankfurt/Main 90(DE)**

(72) Erfinder: **Esser, Gerd, Dr.**
**A-Stifter-Strasse 13**
**D-6233 Kelkheim(DE)**

(74) Vertreter: **Blum, Klaus-Dieter, Dipl.-Ing.**
**Am Römerhof 35**
**D-6000 Frankfurt/Main 90(DE)**

(54) **Verfahren zur Bekämpfung von Schädlingen an Pflanzen.**

(57) Zur Bekämpfung von Schädlingen werden Pflanzen mit UV-Licht einer oder mehrerer Wellenlängen von 200 - 400 nm, vorzugsweise 280 - 315 nm, kontinuierlich oder intermittierend bestrahlt.

EP 0 007 459 A1

0007459

389-63/22/78

CASCH/SUK                                    22. Juni 1979

BATTELLE - INSTITUT E.V., Frankfurt (Main)

==============================

Verfahren zur Bekämpfung von

Schädlingen an Pflanzen

==============================

Die Erfindung bezieht sich auf ein Verfahren zur Bekämpfung von Schädlingen an Pflanzen. Es eignet sich insbesondere zur Bekämpfung von Mikroorganismen, wie Pilzen und Bakterien sowie Viren, Insekten und Milben.

Die bisher bekannten Maßnahmen zur Bekämpfung von Pflanzenkrankheiten und Schädlingen umfassen den chemischen und biologischen Pflanzenschutz. Beim chemischen Pflanzenschutz werden Wirkstoffe in Form von löslichen, emulgierbaren oder dispergierbaren Formulierungen unter Umständen nach Verdünnung mit Wasser oder anderen Lösungsmitteln auf die Pflanzen, Pflanzenteile oder in den Boden gebracht. Die Pflanzenschutzmittel können jedoch zur Schädigung der Pflanzen und zur Rückstandsbildung im Erntegut führen. Beim biologischen Pflanzenschutz werden nützliche Organismen eingesetzt, die die Schädlinge oder ihre Entwicklungsstadien ausschalten oder auf andere Weise negativ beeinflussen. Die termingerechte Massenaufzucht sowie der Freilandeinsatz solcher Nutzorganismen sind jedoch sehr schwierig. Auch ist die Wirkung nicht immer zufriedenstellend, da die Nützlinge sich langsamer entwickeln als die Schädlinge.

Der vorliegenden Erfindung liegt nun die Aufgabe zugrunde, ein verbessertes Verfahren zur Bekämpfung von Schädlingen an Pflanzen zu schaffen, bei dem die o.a. Mängel bekannter Maßnahmen nicht auftreten. Es hat sich gezeigt, daß diese Aufgabe mit dem erfindungsgemäßen Verfahren in technisch sehr fortschrittlicher Weise gelöst werden kann, indem die Pflanzen mit UV-Licht einer oder mehrerer Wellenlängen von 200 - 400 nm kontinuierlich oder intermittierend bestrahlt werden. Vorzugsweise wird UV-Licht einer oder mehrerer Wellenlängen von 280 - 315 nm eingesetzt und die Pflanzen werden mit einer Intensität von 2 - 300 mW/m$^2$ bestrahlt. Die Intensität und die Dauer der Bestrahlung kann in Abhängigkeit von der jeweiligen Pflanzenart innerhalb dieser Grenzen variiert werden, so daß eine Schädigung der Pflanze ausgeschlossen ist. So kann z.B. Getreide mit einer Intensität von etwa 200 bis etwa 250 mW/m$^2$ bestrahlt werden, ohne daß eine Schädigung eintritt.

Die Lichtstrahlung kann sowohl kontinuierlich als auch intermittierend eingesetzt werden. Zur Erzeugung der Lichtstrahlung können Fluoreszenzlampen mit oder ohne Leuchtstoff, Gasentladungslampen, Laser und andere Lichtquellen, die ein geeignetes Spektrum erzeugen, verwendet werden. Die Dauer der Bestrahlung ist ebenfalls von der zu behandelnden Pflanzenart und den zu bekämpfenden Schädlingen abhängig.

Der wesentliche Vorteil der Erfindung ist darin zu sehen, daß keine Chemikalien eingesetzt werden, so daß es zu keiner Rückstandsbildung und keinem Belag von Chemikalien auf den Pflanzen kommt. Ferner ist keine Wartezeit zwischen der Behandlung und der Verwertung des Ernteguts erforderlich. Die Behandlung ist außerdem nicht von der Schädlingsart abhängig.

Die nachfolgenden Beispiele erläutern das erfindungsgemäße Verfahren:

Beispiel 1
Verhinderung des Befalls von Sommerweizen "Kolibri" mit Getreidemehltau (Erysiphe graminis):

Mit dem Getreidemehltau infizierte Weizenpflanzen werden im Gewächshaus mit Licht der Wellenlänge 280 - 315 nm mit einer Intensität von 120 mW . m$^{-2}$ über 8 Stunden/Tag bestrahlt. Nach der Behandlung zeigten die Pflanzen keine Krankheitsanzeichen. Dagegen wiesen die nicht bestrahlten Pflanzen unter den gleichen Bedingungen an 169 Halmen zusammen 1800 Befallstellen allein am obersten Halmblatt auf.

Beispiel 2

Verhinderung des Befalls von Kartoffelpflanzen "Grandifolia"
mit der Welkekrankheit (Phytophthora infestans):

Im Freiland werden auf einer Versuchfläche von 200 $m^2$ Kartoffelpflanzen mit dem Erreger infiziert und anschließend unter den im Beispiel 1 angegebenen Bedingungen bestrahlt. Die behandelten Pflanzen wiesen keine Befallsymptome auf, während die nicht bestrahlten Kartoffelpflanzen starken Befall, wie Welke der Triebe, Braunfärbung der Blattspitzen und der Blattränder, zeigten.

Beispiel 3

Verhinderung des Befalls von Kartoffelpflanzen "Grandifolia"
mit Blattzikaden (Empoasca fabae):

In einem Bestand von Kartoffeln auf 200 $m^2$ werden die Hälfte der Pflanzen einer Bestrahlung der im Beispiel 1 genannten Intensität ausgesetzt. Während der Wachstumsperiode trat bei den nicht bestrahlten Pflanzen spontan starker Befall mit der Blattzikade auf und die typischen Schadsymptome waren zu beobachten, z.B. Weißfleckigkeit der Blätter. An dem bestrahlten Teil des Bestandes an Kartoffelpflanzen wurden keine Schadsymptome beobachtet.

389-63/22/78

CASCH/SUK                                          22. Juni 1979

BATTELLE - INSTITUT E.V., Frankfurt/Main

Patentansprüche

1. Verfahren zur Bekämpfung von Schädlingen an Pflanzen, dadurch gekennzeichnet, daß die Pflanzen mit UV-Licht einer oder mehrerer Wellenlängen von 200 - 400 nm kontinuierlich oder intermittierend bestrahlt werden.

2. Verfahren nach Anspruch 1, dadurch gekennzeichnet, daß die Pflanzen mit UV-Licht einer oder mehrerer Wellenlängen von 280 - 315 nm mit einer Intensität von 2 - 300 mW/m$^2$ bestrahlt werden, wobei die Intensität und die Dauer der Bestrahlung so ausgewählt werden, daß eine Schädigung der zu bestrahlenden Pflanze nicht eintritt.

0007459

3. Verfahren nach Anspruch 1 und 2, dadurch gekennzeichnet, daß zur Erzeugung der UV-Bestrahlung Fluoreszenzlampen, Gasentladungslampen oder Laser eingesetzt werden.

0007459

| Europäisches Patentamt | EUROPÄISCHER RECHERCHENBERICHT | Nummer der Anmeldung |
|---|---|---|
| | | EP 79 10 2180 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CENTRAL PATENTS INDEX:<br>Basic Abstracts Journal, Section C.<br>Week A06, 05-04-1978,<br>London,<br><br>& JP - A - 52 154-779<br><br>---- | 1 |

**KLASSIFIKATION DER ANMELDUNG (Int.Cl. 3)**

A 01 G   7/06
A 01 M   1/22

**RECHERCHIERTE SACHGEBIETE (Int. Cl. 3)**

A 01 G
A 01 M

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-11-1979 | HERYGERS |

EPA form 1503.1   06.78